Europäisches Patentamt

European Patent Office

Office européen des brevets

(19)

(11) Numéro de publication: **0 084 467**

**A1**

(12) # DEMANDE DE BREVET EUROPEEN

(21) Numéro de dépôt: **83400020.0**

(22) Date de dépôt: **04.01.83**

(51) Int. Cl.³: **F 25 D 21/00**
**G 05 B 19/08**

(30) Priorité: **08.01.82 FR 8200240**

(43) Date de publication de la demande:
**27.07.83 Bulletin 83/30**

(84) Etats contractants désignés:
**DE FR GB IT**

(71) Demandeur: **ETS BONNET**
**117, rue Grenette**
**F-69653 Villefranche sur Saone(FR)**

(72) Inventeur: **Lay, Gérard**
**THOMSON-CSF SCPI 173, bld Haussmann**
**F-75379 Paris Cedex 08(FR)**

(74) Mandataire: **Grynwald, Albert et al,**
**THOMSON-CSF SCPI 173, Bld Haussmann**
**F-75379 Paris Cedex 08(FR)**

(54) **Programmateur de dégivrage d'une installation frigorifique multipostes.**

(57) La présente invention concerne le domaine des froid industriel.

Le programmateur selon l'invention comporte un tableau (2) de programmation comprenant des lignes (9) correspondant aux instants successifs de début de dégivrage et des colonnes (8) dont chacune correspond à un poste déterminé. Un coupleur (10) permet de relier une ligne (9) à une colonne (8) pour chaque ordre de dégivrage. Chaque coupleur est visible sur le tableau. Enfin, un automate programmable (1) fournit un signal de dégivrage successivement à chaque ligne à chaque instant de dégivrage. L'automate (1) lit aussi l'état de chaque colonne et élabore ainsi des ordres de dégivrage pour tous les postes de l'installation.

FIG_1

EP 0 084 467 A1

1

# PROGRAMMATEUR DE DEGIVRAGE D'UNE INSTALLATION FRIGORIFIQUE MULTIPOSTES

La présente invention concerne un programmateur de dégivrage d'une installation frigorifique.

Il est courant qu'une installation frigorifique comporte un grand nombre de postes de production de froid présentant de grandes différences de caractéristiques. Notamment, de telles installations sont prévues dans les grands centres de vente de produits alimentaires, dits "supermarchés". Leur fonctionnement oblige à réaliser des dégivrages fréquents dans la journée pour chaque poste.

En effet, l'air ambiant contient une certaine quantité d'eau en vapeur saturante (hygromètrie). Au contact avec les évaporateurs, ou fournisseurs de frigories, l'eau contenue dans l'air se dépose sous forme de givre solide sur les parties froides. Comme le givre est un isolant thermique, son dépot sur un évaporateur entraîne une perte dans le rendement de l'installation. Dans certains postes, le dégivrage doit être réalisé trois à quatre fois par jour.

Ce problème a été jusqu'à ce jour partiellement résolu par des programmateurs cycliques mécaniques. Ceux ci sont constitués par des moteurs et des cames qui entraînent des relais électriques ou des contacts pour commander l'opération de dégivrage. Leurs inconvénients sont nombreux. Notamment le fait que leur fonctionnement comporte des mouvements entraîne que leur fiabilité est faible. Leur souplesse d'utilisation est réduite. En particulier, les remises à l'heure au moment des changements d'horaires légaux sont fastidieuses. D'autre part, il est impossible de centraliser l'ensemble de leurs états momentannés. Par exemple, le responsable de l'installation ne peut connaître sur le moment la liste des postes en dégivrage.

2

D'autre part, les programmateurs mécaniques ne permettent pas de tenir compte des questions d'économie d'énergie et de tranches horaires de consommation électrique. La présente invention ne présente pas ces inconvénients. Elle propose un moyen simple pour gérer d'une manière souple et centralisée tous les ordres de dégivrage.

Un autre avantage de la présente invention est de permettre de programmer le dégivrage d'un nombre important de postes différents. En effet, l'invention propose un programmateur de dégivrage convenable pour des grands ensembles producteurs de froid comme un supermarché. Or la nature des postes de froid est diverse. Un supermarché comprend aussi bien des meubles de conservation de fruits et légumes qui nécessitent seulement + 4 ou + 5°C sur des volumes faibles mais ouverts sur le magasin, que des laboratoires pour le conditionnement de la viande où l'on travaille à -15°C. Les techniques de dégivrage sont donc différentes.

L'invention remédie à ces inconvénients de l'art antérieur.En effet, selon la présente invention, un programmateur de dégivrage d'une installation frigorifique multipostes comporte un tableau de programmation dont les lignes correspondent aux instants successifs de dégivrage et les colonnes, chacune un poste déterminé. Il comporte aussi des moyens pour appliquer des signaux successifs de début de dégivrage aux dites lignes et des coupleurs dont la disposition à l'intersection d'une ligne et d'une colonne provoque à l'instant auquel est appliqué le signal sur cette ligne un signal de dégivrage pendant un temps déterminé du poste correspondant à cette colonne, le dégivrage étant commandé en fonction du poste adressé.D'autres éléments et avantages de la présente invention sont exposés dans la description et les figures annexées qui sont :

- la figure 1 : un schéma d'un programmateur selon l'invention,
- la figure 2 : une partie du tableau du programmateur,
- la figure 3 : une autre partie du tableau,
- la figure 4: une variante du programmateur selon l'invention.

L'invention permet de modifier à volonté les périodes et les durées de dégivrages . Notamment, les heures de dégivrage doivent être choisies en dehors des heures d'affluence du public dans le cas d'une installation frigorifique pour un supermarché. Elles doivent être aussi choisies en dehors des heures à tarification élevée pour la consommation d'électricité, les dispositifs de dégivrage pouvant être très gros consommateurs d'électricité. D'autres impératifs peuvent être pris en compte dans ce domaine comme la participation de l'installation frigorifique à la consommation électrique globale de tout un ensemble consommateur comme un supermarché. En effet, si l'installation frigorifique est intégrée dans un ensemble comportant d'autres consommateurs d'électricité, il faut tenir compte des différentes valeurs de consommation des autres consommateurs pour éviter que l'ensemble passe à des heures de pointe dans des tranches de puissance fortement facturées par le fournisseur de puissance électrique.

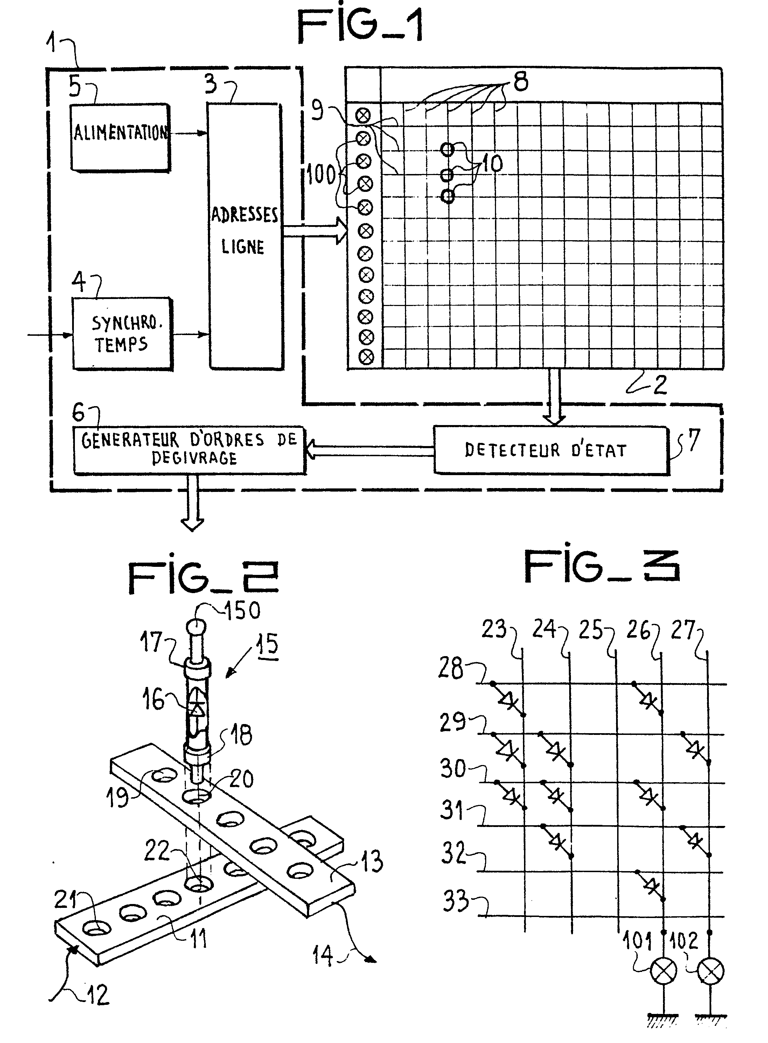

A la figure 1, le programmateur selon l'invention comporte un tableau de programmation apparente 2 et un automate programmable 1. Ce dernier peut comporter notamment un mini ordinateur ou tout dispositif d'électronique programmable. Le tableau 2 comprend un ensemble de colonnes 8 et de lignes 9. A chaque colonne 8 est associé l'un des postes de l'installation frigorifique. A chaque ligne 9 est associée une heure de début de dégivrage. Trois coupleurs 10 ont été représentés. Ces coupleurs comprennent chacun une partie visible sur le tableau 2 qui permet d'indiquer l'heure de début de dégivrage (le numéro de la ligne sur laquelle le coupleur est placé) et le numéro du poste à dégivrer (le numéro de la colonne sur laquelle le coupleur est placé). La fin du dégivrage a lieu à l'instant correspondant à la ligne suivante, sauf si un autre coupleur est positionné sur la même colonne à la ligne suivante.

Dans le cas de la figure 1, trois coupleurs 10 se succèdent sur la même colonne correspondant au poste A. Dans l'exemple de réalisation, les dates de début de dégivrage correspondant à chaque ligne sont espacées d'un quart d'heure de durée. Le dégivrage du poste A durera alors trois quarts d'heure. Son début aura lieu à l'heure correspondante à la première ligne et durera trois quarts d'heure.

Dans un autre mode de réalisation, il est prévu que la durée qui sépare deux dates successives de début de dégivrage comprend un temps de dégivrage et un temps mort. Ce temps mort peut être nécessité par des opérations de nettoyage avant la reprise d'un autre temps de dégivrage. En effet, de l'évaporateur placé dans le poste frigorifique sous dégivrage tombe de l'eau, de la glace en surfusion, etc. Une opération de nettoyage peut être obligatoire, soit manuelle soit automatisé par robot nettoyeur.

A la figure 2 on explique la constitution du tableau 2 grâce à une partie élémentaire du tableau 2 regroupant une ligne 11, une colonne 13 et un coupleur 15. Chaque ligne et chaque colonne du tableau se présente sous la forme d'une plaque allongée percée d'une rangée de trous 19-22. L'ensemble des lignes et des colonnes est disposé de telle sorte qu'à chaque trou d'une ligne correspond verticalement un trou unique d'une colonne. La plaque est réalisée en un matériau conducteur. Le coupleur 15 de la plaque 11 sur la plaque 13 est ici réalisé par une fiche qui, entre deux contacts 17-18, comporte un moyen de passage à sens unique du courant électrique 16. Dans un exemple de réalisation préféré, ce moyen est une diode. Il permet d'éviter que des courants retournent au moyen d'alimentation électrique du tableau et que d'autres colonnes soient activées à des instants non prévus dans la programmation. Quand la fiche 15 est enfoncée dans le tableau pour relier la plaque colonne 13 à la plaque ligne 11, le contact 17 permet de mettre une borne de la diode 16 au potentiel de la plaque-colonne 13 et l'autre contact 18, celui de l'autre borne de la diode 16 au potentiel de la plaque ligne 11. Une connexion 12 amène une tension continue à la plaque 11 de ligne. Quand la fiche à diode est positionnée dans les trous 20, 22, le courant électrique traverse aussi la plaque 13 dont le potentiel est capté par un conducteur 14.

La fiche à diode 15 porte aussi un moyen de signalisation 150 qui peut consister en une boule de couleur.

A la figure 1, l'automate programmable 1 comporte un générateur d'adresse de ligne 3. Ce générateur permet de connecter une ligne quelconque du tableau 2 à une alimentation de tension continue 5. L'automate programmable 1 comporte aussi un détecteur d'état 7. Ce détecteur permet de lire le tableau 2. S'il détecte un courant à une date t sur l'une des colonnes 8, alors cette colonne porte au moins un coupleur. Le poste relatif à la colonne détectée doit donc être dégivré. Le détecteur 7 envoie donc le numéro du poste en question à un générateur d'ordres de dégivrage 6. Ce dernier peut comporter différents organes selon les différents procédés de dégivrage utilisés. Si le poste est dégivré par soufflage d'air chaud le générateur d'ordres de dégivrage comporte un contacteur qui, excité par le signal émit par le détecteur 7, enclenche un moteur d'un ventilateur soufflant sur les éléments froids du poste à dégivrer et met en marche une résistance chauffante. Dans un autre procédé de dégivrage, dit par arrêt de circulation du fluide frigorifique, le générateur d'ordres 6 comporte pour le poste à dégivrer un contacteur qui met le poste à dégivrer un contacteur qui met en route un moteur commandant l'ouverture ou la fermeture de la vanne reliant le poste frigorifique au circuit principal frigorifique. Le générateur 6 comporte donc au moins un dispositif pour commander le dégivrage pour chaque poste. Le synchronisateur de temps 4 émet au bout d'une durée donnée $\Delta$ T un signal de passage à la ligne suivante. Le générateur d'adresses de lignes 3 déconnecte la ligne et connecte l'alimentation 5 à la ligne suivante. Si une autre fiche n'est pas positionnée sur la ligne suivante et sur la même colonne, le poste précédement sous dégivrage est remis en fonctionnement frigorifique normal. Sinon le dégivrage se poursuit pour au moins une nouvelle durée pendant laquelle la ligne suivante est alimentée.

Dans un exemple de réalisation, en fonction de données moyennes de dégivrages, la durée pendant laquelle l'automate programmable fournit une tension à une ligne du tableau est constante et est choisie égale à un quart d'heure. Pour fonctionner par cycle de vingt quatre heures, on a donc utilisé un tableau à quatre vingt seize lignes, chaque ligne étant affectée à un quart d'heure de zéro heure à vingt trois heures quarante cinq minutes. Des moyens d'identification 100, un par ligne, sont prévus qui permettent à un observateur de savoir à tout moment quelle ligne est adressée. Dans l'exemple de réalisation précité, chaque ligne du tableau 2 porte à son début une diode 100 électroluminescente qui est lumineuse quand une tension est fournie par l'automate 1 à la ligne. L'inscription d'heure permet de vérifier si le programmateur fonctionne bien selon l'heure légale fournit par une horloge classique.

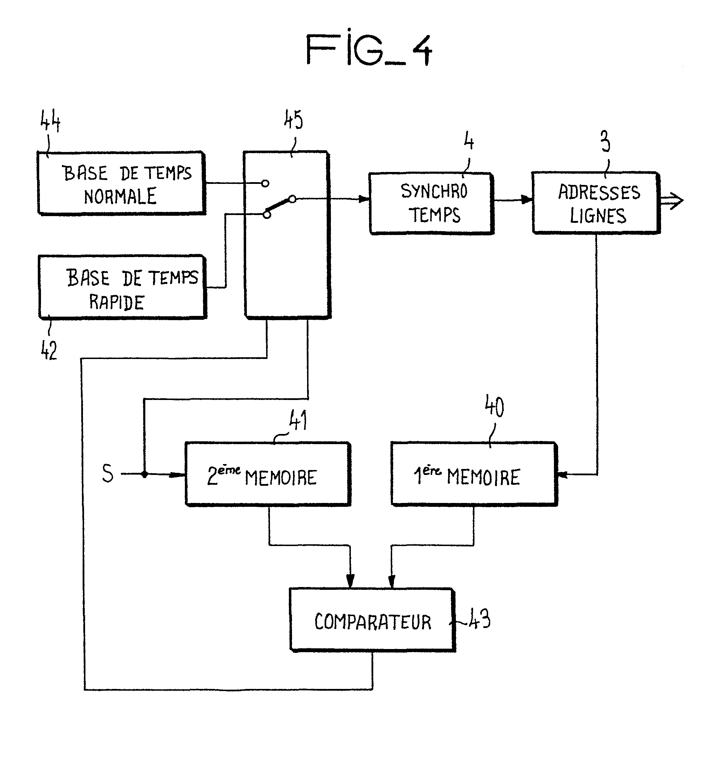

A la figure 3, on a décrit une partie du tableau 2, une fois programmé. Trois postes A, B, C sont associés aux colonnes 23-25 : le poste A à la colonne 23, le poste B à la colonne 24 et le poste C à la colonne 25. Deux colonnes 26, 27 supplémentaires ont été représentées. Leur rôle sera expliqué plus loin. Six lignes 28-33 sont dessinées associés aux heures 10h - 10h15 - 10h30 - 10h45 - 11h - 11h15. Chaque diode dessinée est repérée dans l'ordre, par le numéro de la ligne puis le numéro de la colonne auxquelles elle est connectée. Par exemple la diode dessinée en haut à gauche du tableau de la figure 3 est la diode 2823. On remarque que, dans l'exemple de programmation choisi :

- à la colonne 23, le poste A est sous dégivrage de 10h à 10h45 puis reprend son fonctionnement normal à 10h45 au bout de trois quarts d'heure,

- à la colonne 24, le poste B commence son dégivrage à 10h15 et le termine à 11h quand l'automate programmable passe à l'alimentation de la ligne 32 ;

- à la colonne 25, le poste C n'est jamais dégivré de 10h à 11h30.

L'usage de diodes pour la connexion des lignes aux colonnes va maintenant être justifié. Quand la ligne 29 est mise sous tension, les diodes 2923 et 2924 sont parcourues par des courants qui traversent les colonnes 23 et 24, indiquent à l'automate programmable que les postes A et B doivent être dégivrés. Mais, un courant traversant les colonnes 23 et 24, d'autres liaisons de ligne à colonne permettraient des retours de courant si elles était bidirectionnelles. En utilisant des liaisons unidirectionnelles comme des diodes, on évite ces retours.

Les colonnes 26 et 27 sont des colonnes de test qui permettent de vérifier le bon fonctionnement du programmateur. On remarque que les diodes connectées sur ces deux colonnes sont alternées. Dans un exemple de réalisation, les lignes d'ordre pair du tableau sont connectées à la première colonne 26 de test, celles d'ordre impair sont connectées à la seconde colonne 27 de test. Aucun poste ne correspond à une de ces colonnes. Mais, quelle que soit l'heure, une et une seule des deux colonnes 26 ou 27 est polarisée. Un témoin lumineux 101, 102 permet de vérifier laquelle des deux colonnes est polarisée. Si les deux témoins 101, 102 sont allumés, il existe un court circuit d'une ligne sur la colonne valablement adressé. Si les deux témoins sont éteints simultanément, il existe un défaut dans l'adressage des lignes. De plus, une mémoire particulière de l'automate permet d'enregistrer l'heure du défaut ce qui permet de localiser sa position. Cette mémoire n'est pas représentée au dessin ni le circuit qui permet de détecter les défauts.

Dans un autre mode de réalisation de l'invention, l'automate programmable comporte une base de temps interne distincte du synchronisateur 4. Cette base de temps est beaucoup plus rapide que la base de temps du synchronisateur 4 pour permettre de simuler rapidement tout le cycle de fonctionnement. Dans le cas d'un tableau à quatre vingt seize lignes pour vingt quatre heures, la base de temps du synchronisateur 4 est de quize minutes. La base de temps rapide peut être de une demi seconde. Ceci permet d'accomplir un cycle complet de balayage des lignes en quarante huit secondes. Dans le cas d'une remise à l'heure, l'opérateur constate une différence entre l'heure légale et l'heure affichée sur le tableau. Il peut actionner une touche sur le tableau 2 qui permet de déconnecter pendant le temps de l'enfoncement la synchronisation 4 et connecte la base de temps accélérée au générateur d'adresses de ligne 3. L'opérateur maintient sa pression jusqu'à ce que la diode 100 de la ligne correspondant à l'heure effective ou légale s'allume.

Dans une autre variante, automatique, représentée figure 4, l'automate programmable reçoit un signal S de remise à l'heure périodique, par exemple tous les soirs à vingt deux heures, heure légale. Ce signal excite un commutateur 45 qui déconnecte la base de temps normal 44 et la remplace tant que dure S par la base de temps rapide 42. Une première mémoire, 40 est prévue qui conserve l'heure réelle de dégivrage. Son contenu est comparé à une seconde mémoire 41 qui contient l'indication S de l'heure légale. La base de temps 42 rapide remplace alors le synchronisateur temps jusqu'à ce qu'il y ait concordance du contenu de la première mémoire 40 à celui de la seconde mémoire 41, la concordance étant mesurée par un comparateur 43. Le signal de sortie du comparateur 43 agit alors sur le commutateur 45 pour que la base de temps normale 44 soit à nouveau connectée sur le synchronisateur 4. Cette opération peut être réalisée pour tout décalage de la séquence des dégivrages. On a alors une remise à l'heure sur une heure donnée S par un dispositif extérieur au programmateur. Cette opération peut n'être que momentannée par exemple pour empêcher certains dégivrages à certaines heures sans être contraint de toucher au programme central de l'automate 1.

## REVENDICATIONS

1. Programmateur de dégivrage d'une installation frigorifique comportant plusieurs postes producteurs de froid à dégivrer, caractérisé en ce qu'il comporte un tableau (2) de programmation à lignes (9) correspondant aux instants successifs de début de dégivrage et à colonnes (8) dont chacune correspond à un poste déterminé, et des moyens (1) pour appliquer des signaux successifs de commande de début de dégivrage auxdites lignes, la disposition d'un coupleur (10) à l'intersection d'une ligne (9) et d'une colonne (8) provoquant, à l'instant auquel est appliqué le signal sur cette ligne, un dégivrage pendant un temps ($\Delta T$) déterminé du poste correspondant à cette colonne, le dégivrage étant commandé en fonction du poste adressé.

2. Programmateur selon la revendication 1, caractérisé en ce qu'il comporte un moyen de remise à l'heure de l'ensemble des dégivrages sur une heure (S) fournie par un dispositif extérieur au programmateur.

3. Programmateur selon la revendication 2, caractérisé en ce que le moyen de remise à l'heure comporte une première mémoire (40) qui enregistre l'heure réelle de dégivrage du tableau (2), une seconde mémoire (41) qui enregistre l'heure (S) extérieure au programmateur, une base de temps rapide (42) permettant un balayage rapide des lignes du tableau (2) jusqu'à ce qu'un comparateur (43) arrête le processus à l'égalité du contenu des deux mémoires (40,41).

4. Programmateur selon la revendication 1, caractérisé en ce que les moyens (1) d'application des signaux successifs comportent un générateur de tension continue (5) :

- un générateur (3) d'adresses de lignes du tableau (2) qui connecte l'alimentation (5) à une ligne du tableau (2) ;

- un synchronisateur (4) de temps qui commande le passage de la connexion de l'alimentation (5) à une ligne suivante ;sous l'action d'une base de temps normale (44)

10

- un détecteur d'état (7) qui détecte la présence ou non d'un coupleur (15) sur chaque colonne,

- et enfin un générateur d'ordres de dégivrage (6).

5. Programmateur selon la revendication 1, caractérisé en ce qu'au moins deux colonnes (26, 27) sont réservées sur le tableau (2) comme colonnes de test, les lignes d'ordre pair étant reliées à la première colonne (26) de test par des coupleurs et celles d'ordre impair à la seconde colonne (27) de test et en ce qu'il est prévu des moyens pour détecter si les deux colonnes sont bien alternativement sous tension.

6. Programmateur selon la revendication 5, caractérisé en ce que chaque colonne (26, 27) de test est connectée à un témoin lumineux (101, 102).

1/2

# FIG_1

| | | |
|---|---|---|
| **5** ALIMENTATION | **3** ADRESSES LIGNE | **8** **9** **100** **10** **2** |
| **4** SYNCHRO. TEMPS | | |
| **6** GENERATEUR D'ORDRES DE DEGIVRAGE | | **7** DETECTEUR D'ETAT |

# FIG_2

150
17  15
16
18
20
19
22
13
21
11
14
12

# FIG_3

23  24  25  26  27
28
29
30
31
32
33
101  102

# FIG_4

```
44                45              4            3
BASE DE TEMPS                SYNCHRO      ADRESSES
  NORMALE                     TEMPS        LIGNES

BASE DE TEMPS
   RAPIDE
42

                                    40
S          2ème MEMOIRE      1ère MEMOIRE
                    41

            COMPARATEUR      43
```

Office européen
des brevets

**RAPPORT DE RECHERCHE EUROPEENNE**

**0084467**
Numéro de la demande

EP 83 40 0020

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int Cl. ³) |
|---|---|---|---|
| Y | DE-A-2 850 198 (HAMADEH et al.)<br>* En entier * | 1,4 | F 25 D 21/00<br>G 05 B 19/08 |
| Y | GB-A-2 028 537 (GARRET et al.)<br>* En entier * | 1,4 | |
| A | US-A-3 573 576 (NAKABO)<br>* En entier * | 1 | |
| A | FR-A-2 397 606 (EMHART INDUSTRIES INC.)<br>* Page 4, ligne 4 - page 5, ligne 27; page 9, lignes 15-24; page 10, ligne 35 - page 11, ligne 9; page 30, lignes 5-20; figures 1,2 * | 1-3 | |
| | | | **DOMAINES TECHNIQUES RECHERCHES (Int Cl ³)** |
| A | FR-A-2 454 131 (CENTRA-BURKLE GmbH & CO)<br>* Page 9, ligne 5 - page 12, ligne 9; figures 5,6 * | 1,4 | F 25 D<br>G 05 B<br>G 05 D<br>G 04 B |
| A | US-A-4 204 398 (LEMELSON)<br>* Abrégé * | 2,3 | |
| A | US-A-3 633 180 (PABST)<br>* En entier * | 5 | |

Le présent rapport de recherche a été établi pour toutes les revendications

| Lieu de la recherche<br>LA HAYE | Date d'achèvement de la recherche<br>08-04-1983 | Examinateur<br>SILVIS H. |
|---|---|---|